# EUROPEAN PATENT APPLICATION

(11) **EP 0 585 473 A1**
(43) Date of publication of application: **09.03.1994**
(21) Application number: 93906802.9
(22) Date of filing: 22.03.1993
(51) Int. Cl.: B62M 25/04, B62K 23/04

(54) **GEAR SHIFTER FOR BICYCLE**

(30) Priority: 23.03.1992 JP 64825/92
(71) Applicant: MAEDA INDUSTRIES, LTD., Osaka-fu 587 (JP)
(72) Inventor: TAGAWA, Koichi, Maeda Industries, Ltd., Minamikawachi-gun, Osaka-fu 587 (JP)
(74) Representative: Cross, Rupert Edward Blount
(86) International application number: JP9300335
(87) International publication number: WO9318960

(57) **Abstract**

A gear shifter is provided which requires a smaller torque for a gearshift operation, and improves the gearshift operation by setting a quantity of pivotal movement of the shifter body to an optimum level. The gear shifter includes a shifter body (14) supported pivotably on a suitable portion of a bicycle frame, and a reel (16) for rewinding or paying out a gearshift cable (T) connected to a gear-shifting mechanism. The reel is provided with a first reel member (24) around which the gearshift cable is passed, and a second reel member (25) around which a driving cable (K) is passed. The reel is formed so that it is turned by the driving cable rewound or payed out in accordance with a pivotal movement of the shifter body with the radius of the cable taken up around the first reel member and that of the cable taken up around the second reel member set different.

## Description

### [Field of the Invention]

The present invention relates to a bicycle speed change operation assembly. More specifically, it relates to a speed change operation assembly which is capable of reducing the force required for rotationally operating a speed change operation member to perform a speed change while also optimizing the rotational amount of the speed change operation member to improve the speed change operability.

### [Background Art]

A speed change operation assembly for a sports type bicycle such as racing bicyle or the like is most commonly mounted on a bicycle frame such as top tube, downtube or the like. Therefore, the hand must be removed from the handlebar at the time of performing a speed change, making it impossible to apply brake quickly and necessitating one-hand steering of the bicycle. As a result, the steering becomes unstable, failing to provide a high safety.

A speed change operation is required usually when the road condition change, for instance, from flat to slope or vice versa. In such a case, the running condition tends to become unstable with greater need for braking.

In order to solve this problem, Japanese Utility Model Laid-Open No. 58-46693 proposes a so-called rotary-grip type speed change operation assembly which comprises a cylindrical operation member fitted around a handlebar. The cylindrical operation member is rotationally operated to pull or pay out a speed control cable.

The speed change operation assembly described above makes it possible to perform a speed change operation without removing the hand from the handlebar. Therefore, the running safety can be greatly improved.

With the prior art rotary-grip type speed change operation assembly, a reel portion for winding the speed control cable is provided on the outer circumference of the cylindrical operation member. Since the cylindrical operation member is fitted around the handlebar, the reel portion is required to have a cable winding radius which is larger than the radius of the handlebar.

Due to the need for winding the speed control cable onto the reel portion with the cable winding radius which is larger than the radius of the handlebar, there arises a problem that the force required for rotationally operating the cylindrical operation member becomes large.

Further, due to the large cable winding radius, the pulling length of the speed control cable per given rotation of the cylindrical operation member also becomes large. Thus, when employing a derailleur having a large number of speed stages, the rotational angle of the cylindrical operation member required for shifting between adjacent sprockets need be small.

For this reason, the rotational operation of the cylindrical member must be subtly carried out at the time of performing a speed change. Therefore, it is difficult to shift the chain to a desired sprocket, hence low speed change operability.

Further, the cylindrical operation member need be rotationally held at small angular intervals. Thus, a detent mechanism for holding the operation member at predetermined rotational positions requires precision, thereby leading to an increase of the production cost.

### [Disclosure of the Invention]

It is, therefore, an object of the present invention to provide a bicycle speed change operation assembly which is capable of reducing the force required for rotationally operating a speed change operation member to perform a speed change while also optimizing the rotational amount of the speed change operation member to improve the speed change operability.

The present invention provides a bicycle speed change operation assembly comprising: a speed change operation member rotatably supported at a suitable portion of a bicycle frame; and a winding reel for pulling or paying out a speed control cable which is connected to a shifing mechanism; wherein the winding reel includes a first reel portion for winding the speed control cable, and a second reel portion for winding a drive cable, the winding reel being rotated by pulling or paying out the drive cable in response to rotational operation of the operation member; and wherein a cable winding radius of the first reel portion is different from that of the second reel portion.

Other objects, features and advantages of the present invention will be apparent from the following description of the preferred embodiments given with reference to the accompanying drawings.

### [Brief Description of the Drawings]

Fig. 1 is a view showing an overall arrangement of a bicycle speed change system which employs speed change operation assemblies according to the present invention.

Fig. 2 is a plan view showing a speed change operation assembly according to the present invention.

Fig. 3 is an axial sectional view of the speed change operation assembly shown in Fig. 2.

Fig. 4 is a sectional view taken on lines IV-IV in Fig. 3.

Fig. 5 is a view, partially in section, showing a principal portion of the speed change operation assembly according to the present invention.

Fig. 6 is a view showing how the present invention works.

Fig. 7 is a sectional view taken along lines VII-VII in Fig. 4.

Fig. 8 is a view illustrating the operation of a click mechanism.

Fig. 9 is a view showing a winding reel according to another embodiment of the present invention.

### [Best Mode for Carrying Out the Invention]

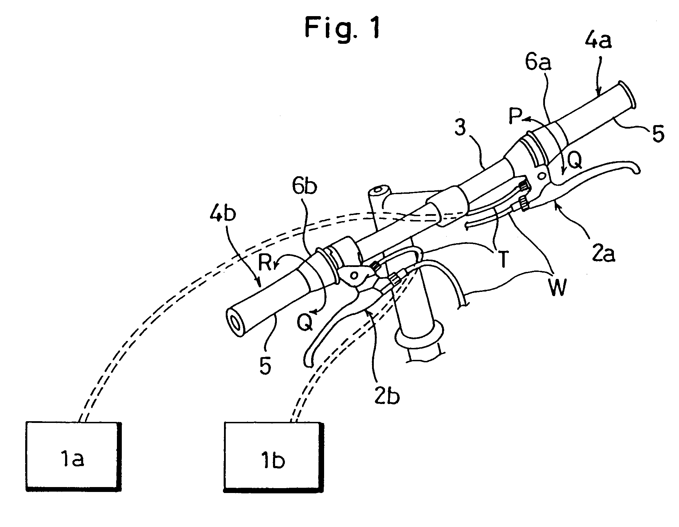

Preferred embodiments according to the present invention will specifically be described with reference to Figs. 1 to 9.

In a bicycle provided with a front shifting mechanism 1a and a rear shifting mechanism 1b, each of speed change operation assemblies 6a, 6b according to the present invention is disposed between a left or right brake lever assembly 2a, 2b and a left or right grip portion 4a, 4b of a handlebar 3, as shown in Fig. 1. The following description will be made with respect to the right speed change operation assembly 6b for controlling the rear shifting mechanism 1b. The left speed change operation assembly 6a for controlling the front shifting mechanism 1a may be similarly configured.

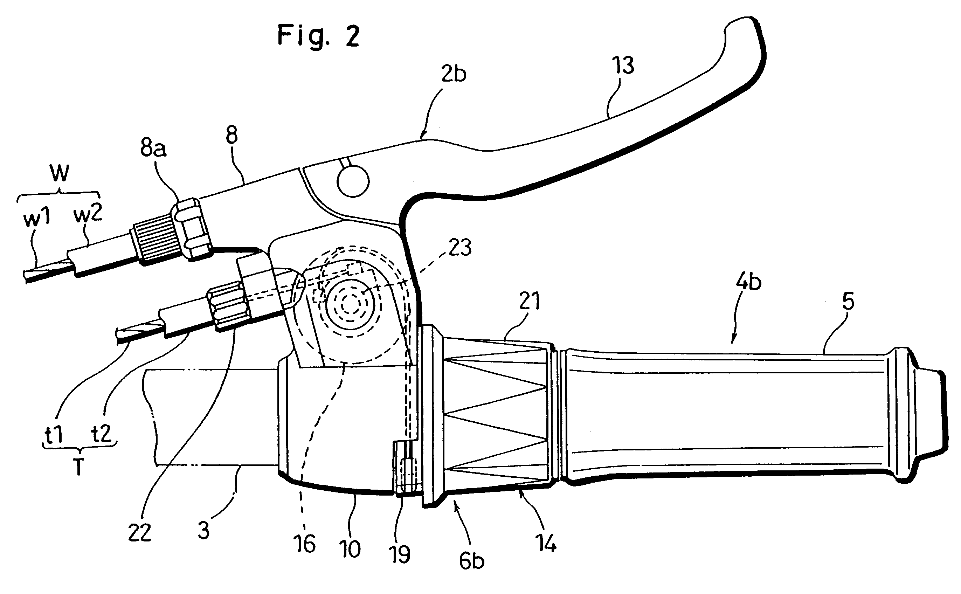

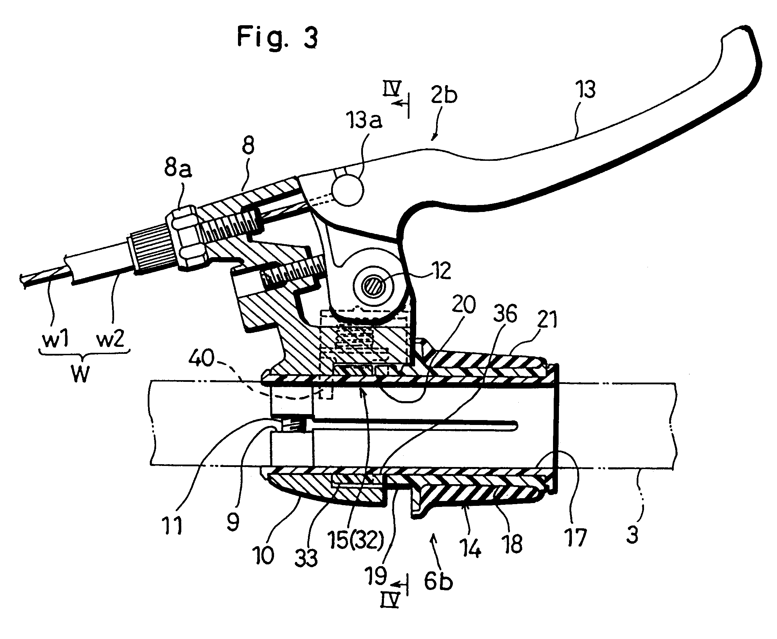

As shown in Figs. 2 and 3, the brake lever assembly 2b according to the present embodiment comprises a brake bracket 8 projecting forward from the front side of the handlebar 3, and a brake lever 13 pivotally connected at its base end to a lever shaft 12 on the brake bracket 8 and extending ahead of the grip portion 4. A brake cable W comprising an inner wire w1 and an outer sheath w2 has its outer sheath w2 connected to a sheath catcher bolt 8a which is screwed to a laterally inner end portion of the brake bracket 8. The inner wire w1 is introduced into an interior space of the brake bracket 8 and has an end nipple 13a connected to a base end portion of the brake lever 13.

Around the handlebar 3 which supports the brake lever assembly 2 and the speed change operation assembly 6b, there is provided a cylindrical resin sleeve 17 for rotatably supporting a cylindrical operation member 14 which will be described hereinafter. The brake bracket 8 has a base end provided with a cylindrical mounting portion 10 which is formed, through its circumferential wall, with a slit 9. The cylindrical mounting portion 10 is fitted around the resin sleeve 17, and a mounting screw 11 traversing the slit 9 causes forcible diametrical contraction of the cylindrical mounting portion 10, thereby fixing the brake bracket 8 together with the resin sleeve 17 relative to the handlebar 3.

As shown in Figs. 2 and 3, the speed change operation assembly 6b according to the present embodiment is integrated with the brake lever assembly 2b, and extends from the brake bracket 8 to the grip portion 4b.

The speed change operation assembly 6b according to the present embodiment includes a cylindrical operation member 14 rotatably fitted around the handlebar 3 axially inwardly from the right grip portion 4b to be continuous with a handle grip 5 fixed to the handlebar 3. The speed change operation assembly further comprises a detent mechanism 15 at the inner circumference of the mounting portion 10 of the brake bracket 8 axially inwardly from the cylindrical operation member 14, and a winding reel 16 rotatably mounted on a support shaft 23 provided on the upper surface of the brake bracket 8 at a base end portion thereof.

The cylindrical operation member 14 includes a control grip portion 18 rotatably fitted around the cylindrical sleeve 17 which is fixedly fitted on the handlebar 3, so that the rider can grip and turn the control grip portion. The operation member further includes a drive reel portion 19 formed integrally with the control grip portion 18 at the laterally inner side thereof for pulling or paying out a drive cable K relative to the winding reel 16, and a connecting portion 20 connected to the detent mechanism 15 for actuation thereof.

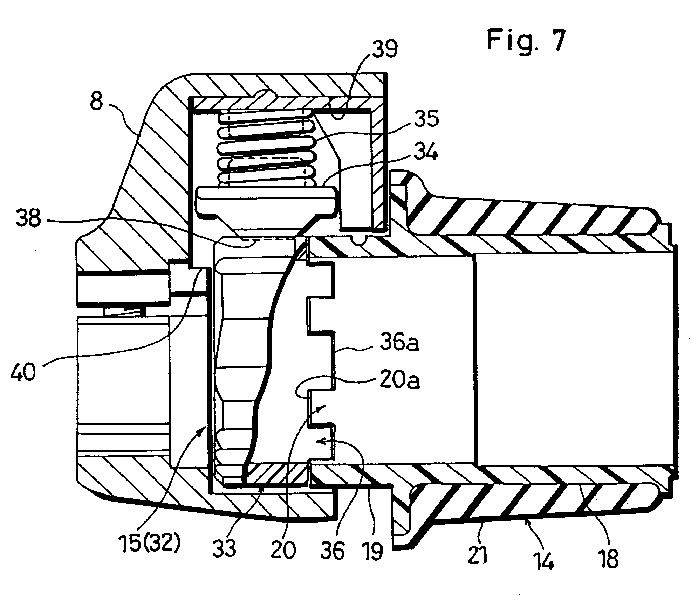

As shown in Fig. 7, the connecting portion 20 comprises engaging teeth 20a formed at the inner end of the cylindrical operation member 14. This connecting portion non-rotatably engages a connecting portion 36 of the detent mechanism 15 for actutating the detent mechanism 15.

The outer circumference of the control grip portion 18 is provided with a rubber coating 21 for the rider to grip conveniently. The coating provides subsutantial continuity with the handle grip 5.

A speed change operation may be performed while the cylindrical operation member 14 or the handle grip 5 is grasped for steering.

Fig. 2 is a plan view of the speed change operation assembly 6b according to the present embodiment. Fig. 3 is a sectional view along the axis of the speed change operation assembly 6b.

According to the present embodiment, a speed control cable T includes an inner wire t1 and an outer sheath t2 enclosing the inner wire. The outer sheath t2 of the control cable T is fastened to a sheath catcher bolt 22 screwed to a base end portion of the brake bracket 8. The inner wire t1 is wound around the winding reel 16 provided on top of the brake bracket 8.

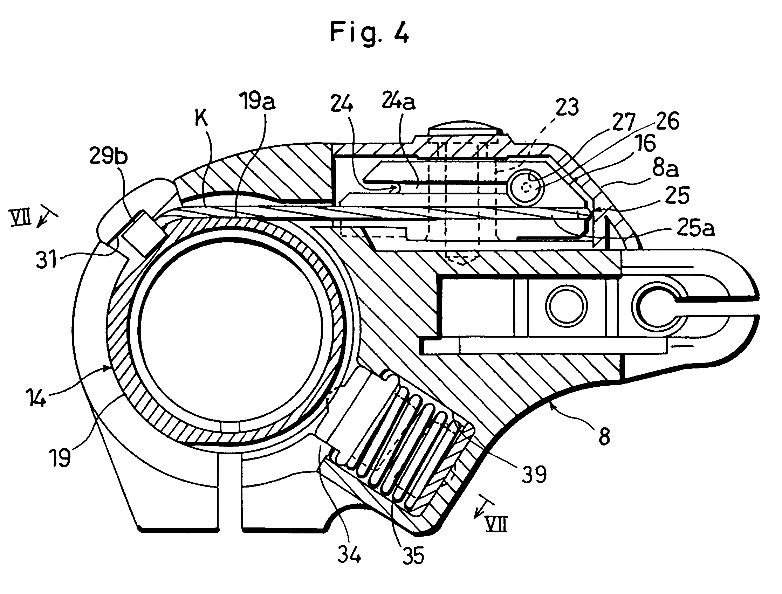

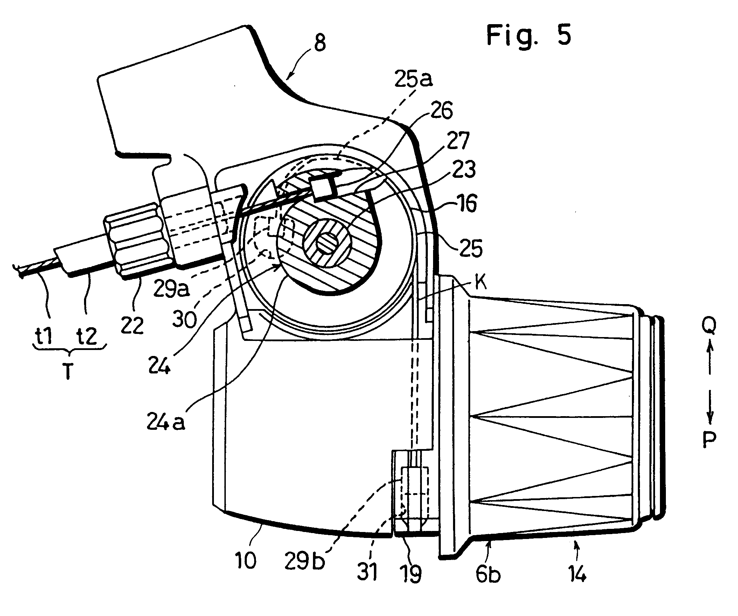

As shown in Figs. 4 and 5, the winding reel 16 has a general shape of a cone frustum and is rotatably supported on the support shaft 23 on top of the brake bracket 8. Indicated by reference sign 8a in Fig. 4 is a cover for covering the winding reel.

The winding reel 16 has its outer periphery provided with a first reel portion 24 for winding the inner wire t1 of the speed control cable T, and with a second reel portion 25 for winding the drive cable K extending from the drive reel portion 19.

The first reel portion 24, which is disposed at a diametrically smaller portion of the winding reel 16, comprises a winding groove 24a in form of a circumferential cut formed in the taper surface of the cone frustum, and a nipple engaging hole 27 extending tangentially to the winding groove 24a in continuity therewith. The inner wire t1 of the speed control cable T is wound in the winding groove 24a and has an end nipple 26 fastened to the nipple engaging hole 27.

On the other hand, the second reel portion 25 is disposed at a diametrically larger portion of the winding reel 16 close to the top of the brake bracket 8 and comprises a winding groove 25a extending generally along the largest diameter circumference of the winding reel 16. The winding groove 25a has a terminal portion bent radially inward, and a nipple engaging hole 30 is formed in continuity with the terminal terminal portion of the winding groove 25a.

The drive cable K, which is wound in the winding groove 25a of the second reel portion 25, has an end nipple 29a engaging in the nipple engaging hole 30. In this way, one end of the drive cable K is connected to the winding reel 16.

The speed control cable T is arranged to extend along the handlebar 3 and has its inner wire t1 extending beyond the sheath catcher bolt 22 generally in parallel to the handlebar for winding on the first reel portion 24. On the other hand, the drive cable K extends from the drive reel portion 19 of the cylindrical operation member 14 perpendicularly to the handlebar 3 for winding on the second reel portion 25 of the winding reel 16.

The speed control cable T and the drive cable K are arranged so as to be pulled and paid out generally perpendicularly to each other. Thus, by pulling the drive cable K circumferentially onto the cylindrical operation member 14 on the handlebar 3, it is possible to pull the inner wire t1 of the speed control cable T in a direction along the handlebar 3.

The drive cable K wound on the second reel portion 25 has another end nipple 29b received in a nipple engaging hole 31 which is formed along a winding groove 19a of the drive reel portion 19 of the cylindrical operation member 14. In this way, the other end of the drive cable K is fastened to the cylindrical operation member 14.

According to the present embodiment, as shown in Figs. 4 and 5, when the cylindrical operation member 14 is rotationally operated to move its top surface rearward (in the direction of arrow P), the drive cable K is pulled by being wound onto the drive reel portion 19 of the cylindrical operation member. As a result, the winding reel 16 is rotated clockwise in Fig. 5, and such rotation of the winding reel 16 causes the inner wire t1 of the speed control cable T to be pulled.

On the other hand, when the cylindrical operation member 14 is rotationally operated to move its top surface forward (in the direction of arrow Q), the drive cable K is paid out from the drive reel portion 19. As a result, the winding reel 16 is rotated counterclockwise under the tension applied to the inner wire t1 by an unillustrated return spring of the shifting mechanism, thereby allowing the inner wire t1 to be paid out from the first reel portion 24.

Such pulling or paying out of the inner wire t1 results in relative axial movement between the inner wire t1 and the outer sheath t2 of the speed control cable. The rear shifting mechanism is thereby actuated.

The detent mechanism 15 is provided at the inner circumference of the cylindrical mounting portion 10 of the brake bracket 8 for holding the cylindrical operation member 14 rotationally stepwise. The detent mechanism 15 according to the present embodiment comprises a click mechanism 32.

The click mechanism 32 generally includes a click ring 33 arranged axially inwardly from the cylindrical operation member 14 for integral rotation therewith, an engaging member 34 held in elastic abutment with the outer circumference of the click ring 33, and a coil spring 35 for elastically urging the engaging member 34.

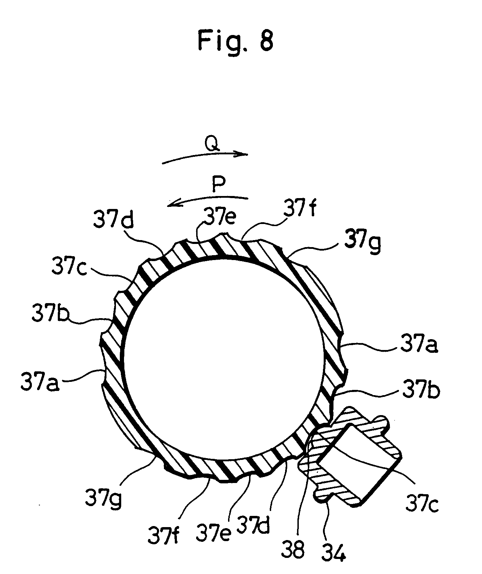

As shown in Figs. 7 and 8, the click ring 33, which is generally cylindrical, is rotatably fitted on the sleeve 17 within the cylindrical mounting portion 10.

The connecting portion 36 provided at the axially outer end of the click ring 33 is connected to the connecting portion 20 at the inner end of the cylindrical operation member 14. Specifically, the connecting portion 36 is formed with a plurality of engaging teeth 36a for mating with the engaging teeth 20a of the connecting portion 20, so that the click ring 33 is integrally rotatable with the cylindrical operation member 14.

As shown in Figs. 7 and 8, the outer circumference of the click ring 33 is formed with a plurality of engaging recesses 37a, 37b--- extending axially in parallel to each other. The engaging member 34 has a pawl 38 for successively coming into elastic engagement with the engaging recesses 37a, 37b---, thereby holding the cylindrical operation member 14 stepwise at predetermined rotational positions.

As shown in Fig. 7, the engaging member 34 is received, together with the coil spring 35, in a housing bore 39 which is provided at a base end portion of the brake bracket 8.

The housing bore 39 has an opening 40 communicating with the interior of the cylindrical mounting portion 10 of the brake bracket 8. The pawl 38 of the engaging member 34 projects inward through the opening 40 for abutment with the outer circumference of the click ring 33.

The rotation of the click ring 33 caused by rotationally operating the cylindrical operation member 14 brings the pawl 38 of the engaging member 34 into successive engagement with the engaging recesses 37a, 37b--- of the click ring 33. As a result, the click ring 33 or the cylindrical operation member 14 can be held stepwise at predetermined rotational positions.

As described above, with the speed change operation assembly 6b according to the present embodiment, the inner wire t1 can be pulled up or paid out by rotationally operating the cylindrical operation member 14, thereby performing a speed change operation.

Further, the click mechanism 32 enables the cylindrical operation member 14 to be clickingly held stepwise at predetermined rotational positions, so that it is possible to perform a speed change operation with reliability and to prevent the inner wire t1 from being erroneously paid out.

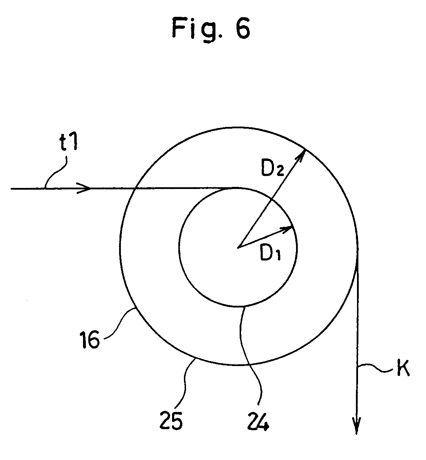

According to the present embodiment, the winding reel 16 is provided with the first reel portion 24 for winding the inner wire t1 as well as with the second reel portion 25 for winding the drive cable K, as previously described. Further, the winding radius D₁ of the first reel portion 24 is set smaller than the winding radius D₂ of the second reel 25, as schematically illustrated in Fig. 6.

Therefore, the pulling force acting on the drive cable K in winding engagement with the second reel portion 25 is utilized, upon amplification, for pulling the speed control wire t1 in winding engagement with the first reel portion 24, as shown in Fig. 6.

Thus, the rotational force required to operate the cylindrical operation member 14 for speed change is greatly reduced, consequently providing greatly improved speed change operability.

Further, due to the setting wherein the winding radius D₁ of the first reel portion 24 is smaller than the winding radius D₂ of the second reel portion 25, the winding length of the wire t1 round the first reel portion 19 is smaller than that of of the drive cable K round the drive reel portion 19.

Therefore, the pulling length of the speed control wire t1 can be rendered smaller relative to the rotational amount of the cylindrical operation member 14. As a result, it is possible to enlarge the rotational angle of the cylindrical operation member 14 for each speed stage interval even if the number of speed stages is set large.

In other words, the interval between the respective rotational positions of the cylindrical operation member 14 corresponding to the respective speed stages can be set large even if use is made of a shifting mechanism having a large number of speed stages. Thus, the cylindrical operation member need not be rotationally operated with subtleness for a speed change operation, thereby improving the speed change operability.

Further, it is possible to set a large interval between the respective engaging recesses 37a, 37b--- at the outer circumference of the click ring 33 of the click mechanism 32. Thus, a high precision is no required at the time of manufacturing the click ring, thereby reducing the production cost.

It is moreover possible to improve the speed change operability by adjustably optimizing the rotational amount of the cylindrical operation member 14.

The scope of present invention is not limited to the above-described embodiment.

According to the embodiment, the present invention is applied to a speed change operation assembly 6b which incorporates a cylindrical operation member 14 rotatably fitted around a grip portion of a handlebar. However, the present invention may be applied to a conventional speed change operation assembly which incorporates a speed change lever provided at a suitable portion of a bicycle frame.

While the winding reel 16 is mounted on top of the brake bracket 8 according to the embodiment, such an arrangement is not limitative. The winding reel may be rotatably supported on a support shaft which is mounted, directly or indirectly via a bracket or the like, to a suitable portion of a bicycle frame.

The present invention, which is applied to the right-hand speed change operation assembly 6b for actuating the rear shifting mechanism according to the embodiment, may also be applied to the left-hand speed change operation assembly 6a for actuating the rear shifting mechanism.

According to the present invention, the detent mechanism 15 may also comprise, as an alternative to the click mechanism 32, other engaging mechanism such as ratchet mechanism or the like.

The speed control cable T, which extends along the handlebar 3 for connection to the brake bracket 8 according to the embodiment, may be made to extend perpendicularly to the handlebar 3 for connection to the brake bracket 8.

According to the embodiment, the first reel portion 24 and the second reel portion 25 are formed separately on the winding reel 16 as displaced axially from each other. However, the first and second reel portions may be formed helically continuous with each other, and the speed control wire is continuously and helically wound on the helical reel portion before winding onto the drive reel portion. In this case, the speed control wire serves also as the drive cable.

According to the embodiment, the winding radius D₁ of the first reel portion 24 is set smaller than the winding radius D₂ of the second reel portion 25. However, the winding radius of the first reel portion 24 may be set larger than that of the second reel portion 25.

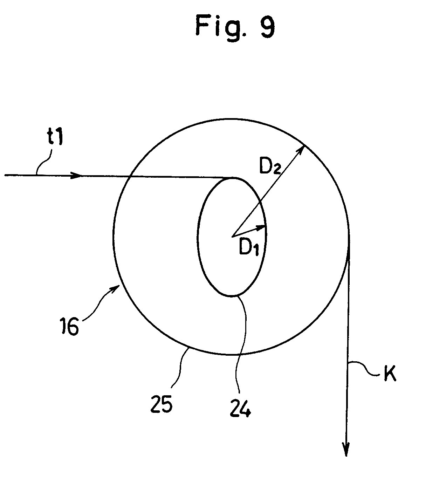

Further, one or both of the first and second reel portions 24, 25 may be formed ellipsoidal to vary the cable winding radius in dependence on the circumferential position of the cylindrical operation member 14, as shown in Fig. 9. In this way, the pulling force or the cable pulling length with respect to the inner wire t1 can be varied depending on the rotational position of the cylindrical operation member 14.

Particularly, even if the cable pulling length of the inner wire t1 required for shifting the chain from one sprocket to an adjacent sprocket differs with the speed stage, the rotational amount of the speed change operation member can be made constant with respect to a speed change from any stage to a next stage by varying the cable winding radius to adjust the cable winding length per unit rotational amount of the speed change operation member. Further, by making the rotational amount of the speed change operation member constant for each speed stage interval as above, the interval between the respective engaging recesses 37a, 37b--- at the outer circumference of the click ring 33 can be made also constant. As a result, the operability of the speed change operation assembly may be greatly improved, and the machining of the click ring 33 can be greated facilitated to reduce the production cost.

## Claims

1. A bicycle speed change operation assembly comprising: a speed change operation member rotatably supported at a suitable portion of a bicycle frame; and a winding reel for pulling or paying out a speed control cable which is connected to a shifing mechanism;
wherein the winding reel includes a first reel portion for winding the speed control cable, and a second reel portion for winding a drive cable, the winding reel being rotated by pulling or paying out the drive cable in response to rotational operation of the operation member; and
wherein a cable winding radius of the first reel portion is different from that of the second reel portion.

2. The bicycle speed change operation assembly according to claim 1, wherein the cable winding radius of the first reel portion is set smaller than that of the second reel portion.

3. The bicycle speed change operation assembly according to claim 1, wherein the speed change operation member comprises a cylindrical operation member rotatably fitted around a grip portion of a handlebar.

4. The bicycle speed change operation assembly according to claim 1, wherein each of the respective cable winding radii of the first and second reel portions is constant.

5. The bicycle speed change operation assembly according to claim 1, wherein one or both of the respective cable winding radii of the first and second reel portions varies circumferentially of the winding reel.

6. The bicycle speed change operation assembly according to claim 1, wherein the winding reel is supported by a brake bracket.

7. The bicycle speed change operation assembly according to claim 2, further comprising a drive reel portion supported axially inwardly from the cylindrical operation member to rotate about an axis of the handlebar, the drive reel portion functioning to pull or pay out the drive cable.

8. The bicycle speed change operation assembly according to claim 2, further comprising a drive reel portion supported axially inwardly from the cylindrical operation member to rotate about an axis of the handlebar, the drive reel portion functioning to pull or pay out the drive cable.

9. The bicycle speed change operation assembly according to claim 7, wherein the first reel portion is helically continuous with the second reel portion, the speed control cable being wound on the helical reel portion and having an end merging into the drive cable.

10. The bicycle speed change operation assembly according to claim 1, wherein one or both of the respective cable winding radii of the first and second reel portions varies circumferentially of the winding reel, whereby the rotational amount of the speed change operation member is rendered constant with respect to a speed change between each adjacent speed stages.
